# EUROPEAN PATENT APPLICATION

(11) **EP 4 517 946 A1**
(43) Date of publication of application: **05.03.2025**
(21) Application number: 23841977.4
(22) Date of filing: 15.06.2023
(51) Int. Cl.: H01M 50/107, H01M 50/536

(54) **BATTERY CELL, BATTERY, AND ELECTRIC DEVICE**

(30) Priority: 21.07.2022 CN 202221889209 U
(71) Applicant: Contemporary Amperex Technology (Hong Kong) Limited, Hong Kong (HK)
(72) Inventor: NIU, Di, Ningde, Fujian 352100 (CN); BAI, Qinglin, Ningde, Fujian 352100 (CN); MENG, Hao, Ningde, Fujian 352100 (CN); GUO, Xin, Ningde, Fujian 352100 (CN); FENG, Tao, Ningde, Fujian 352100 (CN); LIU, Siqi, Ningde, Fujian 352100 (CN)
(74) Representative: Ran, Handong
(86) International application number: PCT/CN2023/100524
(87) International publication number: WO 2024/016911

(57) **Abstract**

The present application discloses a battery cell, a battery, and an electric device. The battery cell comprises a housing, an electrode assembly, and a current collector component. The housing is provided with an electrode lead-out member. The electrode assembly is accommodated in the housing and comprises a tab. The current collector component is used for electrically connecting the tab to the electrode lead-out member, the current collector component is welded to the electrode lead-out member, the current collector component comprises a conductive protection layer, and the conductive protection layer is disposed on the side of the current collector component facing away from the electrode lead-out member. Embodiments of the present application can improve the yield of the battery cell.

## Description

### CROSS-REFERENCE TO RELATED APPLICATIONS

This application claims priority to Chinese Patent Application No. 202221889209.4, filed on July 21, 2022 and entitled "BATTERY CELL, BATTERY, AND ELECTRIC DEVICE", which is incorporated herein by reference in its entirety.

### TECHNICAL FIELD

This application relates to the field of batteries, and in particular, to a battery cell, a battery, and an electric device.

### BACKGROUND

Battery cells are widely used in electronic devices such as mobile phones, laptops, battery carts, electric vehicles, electric aircrafts, electric ships, electric toy cars, electric toy ships, electric toy aircrafts, and electric tools.

In the production process of battery cells, how to improve the yield rate of battery cells is an important research direction in battery technologies.

### SUMMARY

This application provides a battery cell, a battery, and an electric device, which can improve a yield rate of the battery cell.

According to a first aspect, this application provides a battery cell, including a housing, an electrode assembly, and a current collector member, where the housing has an electrode lead-out member. The electrode assembly is accommodated in the housing and includes a tab. The current collector member is configured to electrically connect the tab to the electrode lead-out member, where the current collector member is welded to the electrode lead-out member, the current collector member includes a conductive protective layer, and the conductive protective layer is disposed on a side of the current collector member facing away from the electrode lead-out member.

In the foregoing technical solution, the current collector member has the conductive protective layer, the conductive protective layer can protect a position of the current collector member where the current collector member is in contact with a upper welding needle during welding, reducing the degree of adhesion of the current collector member to the upper welding needle or even avoiding adhesion of the current collector member to the upper welding needle, reducing damage to the current collector member, and improving the yield rate of the battery cell.

In some embodiments, the current collector member includes a current collector plate, and the conductive protective layer is disposed on a surface of the current collector plate facing away from the electrode lead-out member; where a material of the current collector plate includes a first metal, and a material of the conductive protective layer includes a second metal, metal activity of the second metal being weaker than metal activity of the first metal.

In the foregoing technical solution, metal activity of the conductive protective layer is weaker than metal activity of the current collector plate. The current collector plate is relatively more prone to chemically react with the upper welding needle of a metal material, forming an alloy and sticking together with the upper welding needle. Therefore, through the provision of the conductive protective layer, which has weaker metal activity and is less prone to chemically react with the upper welding needle, the situation of adhesion of the current collector member to the upper welding needle is alleviated and even avoided, improving the yield rate of the battery cell. The conductive protective layer is made of a metal material, which makes it easier to manufacture and has lower manufacturing costs.

In some embodiments, the current collector plate includes a plate body and a protrusion portion protruding from the plate body and facing toward the electrode lead-out member, the current collector plate is provided with a recess portion at a position corresponding to the protrusion portion, and the conductive protective layer is disposed on a bottom surface of the recess portion; and the electrode lead-out member is provided with an accommodating portion at a position opposite the protrusion portion, and the protrusion portion and the accommodating portion fit each other in a concave-convex manner.

In the foregoing technical solution, through the provision of the protrusion portion and the accommodating portion, the contact area between a welding region of the current collector plate and a welding region of the electrode lead-out member is increased, thereby enhancing the current flow capability of the battery cell, increasing the heat input, accelerating the melting speed of the welding region of the current collector plate and the welding region of the electrode lead-out member, and improving the welding efficiency and welding quality. Furthermore, the provision of the recess portion also increases an internal space of the electrode assembly; and the provision of the accommodating portion reduces the manufacturing costs of the electrode lead-out member.

In some embodiments, a welding layer is further included, where the welding layer is disposed between the current collector member and the electrode lead-out member and connects the current collector member to the electrode lead-out member.

In the foregoing technical solution, when the welding layer is provided on at least one of the current collector member and the electrode lead-out member, compared to a situation when the two are in direct contact, the welding layer can alleviate the problem of high welding difficulty and low welding quality caused by the contact of the metal oxide films formed on the current collector member and the electrode lead-out member in their respective welding regions, thereby improving the welding quality and welding efficiency.

In some embodiments, a material of the current collector member includes the first metal, a material of the electrode lead-out member includes a third metal, and a material of the welding layer includes a fourth metal, metal activity of the fourth metal being weaker than metal activity of either the first metal or the third metal.

In the foregoing technical solution, the first metal and the third metal have relatively higher activity, and are prone to generate a metal oxide film, resulting in high welding difficulty and poor welding quality problems. Through the provision of the welding layer with weaker metal activity between the two, where a metal oxide film is less prone to be formed on the welding layer and the amount of the formed metal oxide film is small, the two are welded through the welding layer, which can reduce the welding difficulty and improve the welding quality and efficiency. The welding layer is made of a metal material, which makes it easier to manufacture and has lower manufacturing costs.

In some embodiments, the welding layer includes a first welding sub-layer and a second welding sub-layer stacked together, the first welding sub-layer being disposed on the current collector member, and the second welding sub-layer being disposed on the electrode lead-out member.

In the foregoing technical solution, through the provision of the first welding sub-layer on the current collector member and the provision of the second welding sub-layer on the electrode lead-out member, the current collector member and the electrode lead-out member are welded together through the first welding sub-layer and the second welding sub-layer. Metal activity of the first welding sub-layer and the second welding sub-layer is weaker than metal activity of either the first metal contained in the current collector member or the third metal contained in the electrode lead-out member. Therefore, compared to the welding of the current collector member to the electrode lead-out member, during the welding of the first welding sub-layer to the second welding sub-layer, a metal oxide film is less prone to be formed and the amount of the formed metal oxide film is small, resulting in low welding difficulty and high welding quality.

In some embodiments, the current collector member includes the plate body and the protrusion portion protruding from the plate body and facing toward the electrode lead-out member, the current collector member is provided with the recess portion at the position corresponding to the protrusion portion, and the conductive protective layer is disposed on the bottom surface of the recess portion; the electrode lead-out member is provided with the accommodating portion at a position corresponding to the protrusion portion, and the protrusion portion and the accommodating portion fit each other in a concave-convex manner; and the first welding sub-layer is disposed on a surface of the protrusion portion facing the electrode lead-out member, and the second welding sub-layer is disposed on a bottom surface of the accommodating portion.

In the foregoing technical solution, through the provision of the first welding sub-layer on the protrusion portion and the second welding sub-layer on the accommodating portion, the contact area between the welding region of the current collector plate and the welding region of the electrode lead-out member is increased, thereby enhancing the current flow capability of the battery cell, increasing the heat input, and improving the welding efficiency and welding quality.

In some embodiments, the protrusion portion is a curved structure.

In the foregoing technical solution, the protrusion portion is configured as a curved structure, which significantly increases the contact area between the welding region of the electrode lead-out member and the welding region of the current collector member, thereby increasing the heat input, and improving the welding efficiency and welding quality.

In some embodiments, the protrusion portion includes a first planar portion disposed in a central region of itself, and a bottom surface of the accommodating portion includes a second planar portion, the first planar portion and the second planar portion being in abutting fit.

In the foregoing technical solution, the protrusion portion is fitted to the accommodating portion through the first planar portion and the second planar portion, making the protrusion portion and the accommodating portion easy to process and manufacture. In addition, the degree of fitting between the first planar portion and the second planar portion is high, resulting in good welding quality.

In some embodiments, the protrusion portion includes a plurality of protruding structures disposed in a central region, the protruding structures protruding in a direction approaching and/or leaving a bottom surface of the accommodating portion.

In the foregoing technical solution, due to the presence of the plurality of protruding structures, the current per unit area of the protrusion portion increases during welding, and the heat input increases, thus the welding quality is improved.

In some embodiments, the bottom surface of the accommodating portion includes a third planar portion, and the plurality of protruding structures include a plurality of protrusions protruding in the direction approaching the bottom surface of the accommodating portion, the third planar portion abutting against at least part of the plurality of protrusions.

In the foregoing technical solution, the accommodating portion abuts against at least part of the protrusions through the plane, making it easy to process and manufacture.

In some embodiments, a surface of the protrusion portion facing away from the electrode lead-out member includes a storage portion connecting to the bottom surface of the recess portion, the storage portion being in communication with the recess portion.

In the foregoing technical solution, the storage portion is provided to accommodate the overflow material overflowed from the current collector member during welding, reducing the volume of material overflowed to other parts and improving the yield rate of the battery cell.

In some embodiments, the storage portion is disposed around the bottom surface of the recess portion.

In the foregoing technical solution, by being disposed around the bottom surface of the recess portion, it can accommodate overflow material overflowed from the recess portion at any angle, significantly reducing the volume of overflow material overflowed to other parts.

In some embodiments, a groove is disposed on a side of the plate body facing away from the electrode lead-out member.

In the foregoing technical solution, through the provision of the groove on the side of the plate body facing away from the electrode lead-out member, the deformation caused by the pressure of the upper welding needle during welding can be reduced, improving the yield rate of the battery cell. At the same time, the provision of the groove also facilitates the injection of the electrolyte.

In some embodiments, the current collector member and the electrode lead-out member are arranged in a first direction, where a ratio of a maximum dimension by which the protrusion portion protrudes from the plate body along the first direction to a dimension of the plate body in the first direction is 1:1 to 5:1; and a ratio of a maximum dimension of the accommodating portion in the first direction to a dimension of the electrode lead-out member in the first direction is 1:2 to 1:5.

In the foregoing technical solution, the foregoing ratios are set to balance the welding quality and the yield rate of the battery cell, meaning that both the welding quality and the yield rate of the battery cell are high.

In some embodiments, the current collector member and the electrode lead-out member are arranged in a first direction, where a ratio of a projected area of the protrusion portion on a first plane in the first direction to a projected area of the current collector plate on the first plane in the first direction is 1:4 to 1:12; and a ratio of a projected area of the accommodating portion on the first plane in the first direction to a projected area of the electrode lead-out member on the first plane in the first direction is 1:2.5 to 1:6; the first plane being perpendicular to the first direction.

In the foregoing technical solution, the foregoing ratios are set to balance the welding quality and the yield rate of the battery cell, meaning that both the welding quality and the yield rate of the battery cell are high.

According to a second aspect, an embodiment of this application provides a battery, including the battery cell according to any one of the embodiments of the first aspect.

According to a third aspect, this application provides an electric device, including the battery according to the second aspect, where the battery is configured to supply electrical energy.

### BRIEF DESCRIPTION OF DRAWINGS

The following describes features, advantages, and technical effects of the example embodiments of this application with reference to the accompanying drawings.
FIG. 1 is a schematic structural diagram of an electric device according to some embodiments of this application;
FIG. 2 is a schematic exploded view of a battery according to some embodiments of this application;
FIG. 3 is a schematic structural diagram of a battery cell according to some embodiments of this application;
FIG. 4 is an exploded view of a current collector member and an electrode lead-out member in a battery cell in a welding process according to some embodiments of this application;
FIG. 5 is a top view of the current collector member in FIG. 4;
FIG. 6 is a top view of the electrode lead-out member in FIG. 4;
FIG. 7 is a schematic structural diagram of a current collector member and an electrode lead-out member in a battery cell in a welding process according to some embodiments of this application;
FIG. 8 is a schematic structural diagram of a current collector member and an electrode lead-out member according to some embodiments of this application;
FIG. 9 is another exploded view of a current collector member and an electrode lead-out member in a battery cell in a welding process according to some embodiments of this application;
FIG. 10 is still another exploded view of a current collector member and an electrode lead-out member in a battery cell in a welding process according to some embodiments of this application; and
FIG. 11 is a schematic structural diagram of the current collector member in FIG. 8.

Reference signs in the specific embodiments are described as follows:
1. vehicle; 2. battery; 3. controller; 4. motor; 5. battery cell; 51. housing; 511. electrode lead-out member; 512. accommodating portion; 513. second planar portion; 514. third planar portion; 52. electrode assembly; 521. tab; 53. current collector member; 531. conductive protective layer; 532. current collector plate; 533. plate body; 534. protrusion portion; 535. recess portion; 536. first planar portion; 537. protruding structure; 538. protrusion; 539. storage portion; 54. welding layer; 541. first welding sub-layer; 542. second welding sub-layer; 6. upper welding needle; 7. lower welding needle; 8. box; and X. first direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

The battery cell in the application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes. This is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode coated region and a positive tab connected to the positive electrode coated region. The positive electrode coated region is coated with the positive electrode active substance layer, and the positive tab is coated with no positive electrode active substance layer. A lithium-ion battery cell is used as an example, for which, the positive electrode current collector may be made of aluminum, the positive electrode active substance layer includes a positive electrode active substance, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The negative electrode current collector includes a negative electrode coated region and a negative tab connected to the negative electrode coated region. The negative electrode coated region is coated with the negative electrode active substance layer, and the negative tab is coated with no negative electrode active substance layer. The negative electrode current collector may be made of copper, the negative electrode active substance layer includes a negative electrode active substance, and the negative electrode active substance may be carbon, silicon, or the like. The separator may be made of PP (polypropylene, polypropylene), PE (polyethylene, polyethylene), or the like.

The battery cell further includes a housing, and an accommodating cavity is formed inside the housing for accommodating the electrode assembly. The housing can protect the electrode assembly from the outside to prevent external foreign matters from affecting charging or discharging of the electrode assembly.

In a battery cell, tabs are usually electrically connected to an electrode lead-out member through a current collector member, and the current collector member and the electrode lead-out member are usually connected through welding. The inventors have found that during the welding of the current collector member to the electrode lead-out member, a welding needle tends to adhere to the current collector member, and when the welding needle is removed, the welding needle may carry away some material from the current collector member, causing a risk of failure of the current collector member, and reducing the product yield rate and the welding efficiency.

In view of this, this application provides a technical solution, which provides a conductive protective layer on the current collector member to protect the current collector member during welding, so as to reduce the degree of adhesion of the welding needle to the current collector member, reduce the damage to the current collector member, and improve the product yield rate.

The battery cell described in the embodiments of this application is applicable to a battery and an electric device using the battery cell.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for description of the following embodiments.

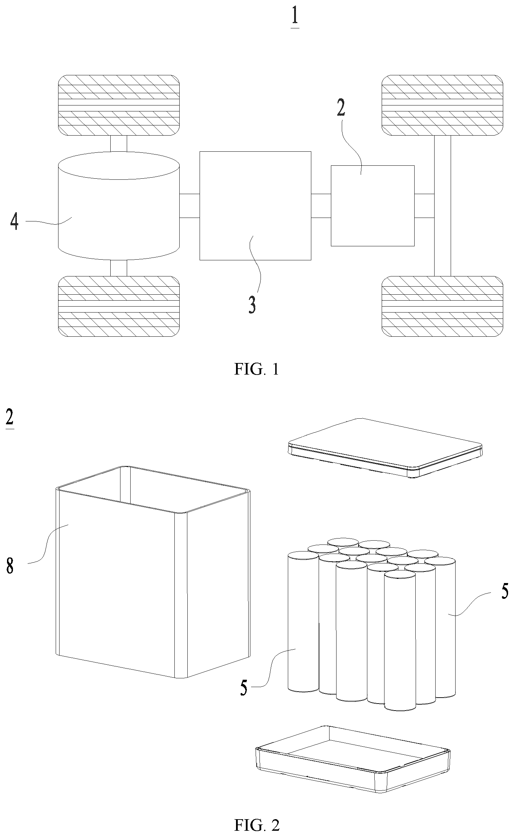

FIG. 1 is a schematic structural diagram of an electric device according to some embodiments of this application.

As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power source for the vehicle 1.

The vehicle 1 may further include a controller 3 and a motor 4, and the controller 3 is configured to control the battery 2 to supply power to the motor 4, for example, to satisfy a working electricity need during start, navigation, and driving of the vehicle 1.

In some embodiments of this application, the battery 2 can be used as not only the operational power supply for the vehicle 1 but also a driving power supply for the vehicle 1, replacing all or a part of the fossil fuel or the natural gas to provide driving power for the vehicle 1.

FIG. 2 is a schematic exploded view of a battery according to some embodiments of this application.

As shown in FIG. 2, the battery 2 includes a box 8 and a battery cell 5, where the battery cell 5 is accommodated in the box 8.

The box 8 is configured to accommodate the battery cell 5, and the box 8 may have various structures. This is not limited in this application.

In the battery 2, the battery cell 5 may be provided in one or more. If a plurality of battery cells 5 are provided, the plurality of battery cells 5 may be connected in series, parallel, or series-parallel, where being connected in series-parallel means a combination of series and parallel connections of the plurality of battery cells. The plurality of battery cells 5 may be directly connected in series, parallel, or series-parallel, and then an entirety of the plurality of battery cells 5 is accommodated in the box 8; or certainly, the plurality of battery cells 5 may be connected in series, parallel, or series-parallel first to form a battery module, and then a plurality of battery modules are connected in series, parallel, or series-parallel to form an entirety which is accommodated in the box 8.

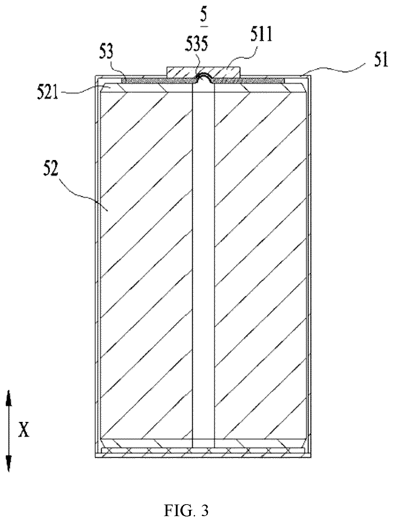

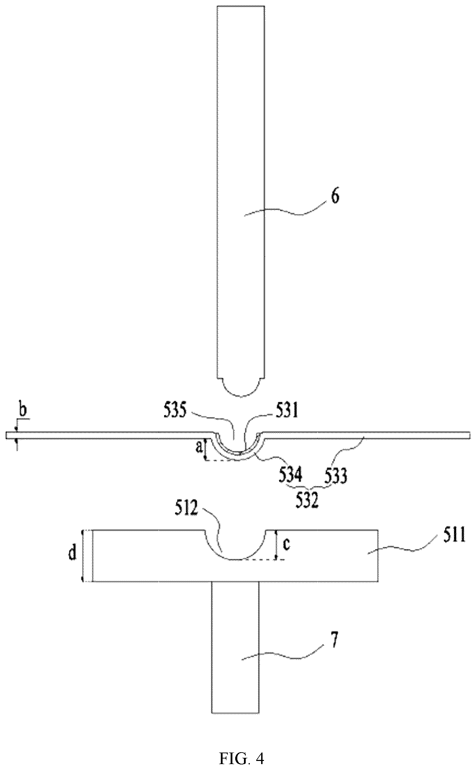

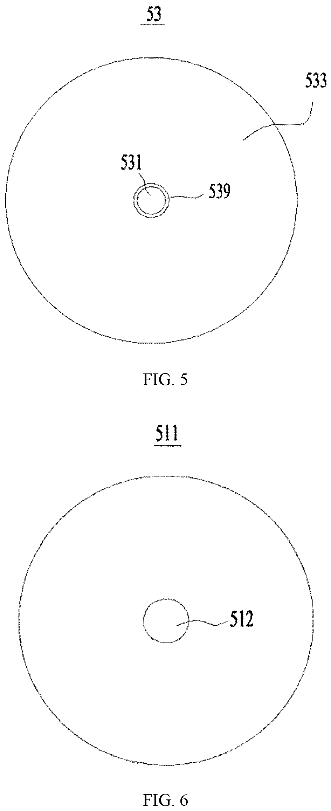

FIG. 3 is a schematic structural diagram of a battery cell according to some embodiments of this application; FIG. 4 is an exploded view of a current collector member and an electrode lead-out member in a battery cell in a welding process according to some embodiments of this application; FIG. 5 is a top view of the current collector member in FIG. 4; and FIG. 6 is a top view of the electrode lead-out member in FIG. 4.

As shown in FIG. 3 to FIG. 6, the battery cell 5 in the embodiments of this application includes a housing 51, an electrode assembly 52, and a current collector member 53. The housing 51 has an electrode lead-out member 511. The electrode assembly 52 is accommodated in the housing 51 and includes a tab 521. The current collector member 53 is configured to electrically connect the tab 521 to the electrode lead-out member 511, where the current collector member 53 is welded to the electrode lead-out member 511, the current collector member 53 includes a conductive protective layer 531, and the conductive protective layer 531 is disposed on a side of the current collector member 53 facing away from the electrode lead-out member 511.

The embodiments of this application do not limit the shape of the housing 51, which can generally be cuboid, cylindrical, or of other shapes.

The housing 51 is a hollow structure, and an accommodating cavity is formed inside it for accommodating the electrode assembly 52 and an electrolyte. The shape of the housing 51 may be determined based on a specific shape of the electrode assembly 52. For example, if the electrode assembly 52 is a cuboid structure, a cuboid housing may be selected; and if the electrode assembly 52 is a cylindrical structure, a cylindrical housing may be selected.

The housing 51 may be made of various materials, for example, the housing 51 may be made of metal or plastic. Optionally, the housing 51 may be made of copper, iron, aluminum, steel, aluminum alloy, or the like.

The electrode lead-out member 511 is configured to electrically connect the electrode assembly 52 to an external circuit of the battery cell 5 to achieve charging and discharging of the electrode assembly 52. For example, the electrode lead-out member 511 is at least partly exposed to the outside of the battery cell 5 for ease of connection to other members (for example, a busbar), which in turn leads out electrical energy generated by the electrode assembly 52.

The embodiments of this application do not limit the specific material of the current collector member 53 and the conductive protective layer 531, which may be metal or other non-metallic, high-temperature-resistant conductive materials. For example, the material of the main part of the current collector member 53 is aluminum or steel, and the material of the conductive protective layer 531 is nickel or a conductive carbon layer.

The embodiments of this application do not limit the specific position of the conductive protective layer 531 disposed on the current collector member 53. For example, the conductive protective layer 531 may be disposed in a central region on a side of the current collector member 53 facing away from the electrode lead-out member 511.

Optionally, the current collector member 53 is welded to the electrode lead-out member 511 through resistance welding. During resistance welding, an upper welding needle 6 abuts against the conductive protective layer 531, a lower welding needle 7 abuts against a side of the electrode lead-out member 511 facing away from the current collector member 53, and the upper welding needle 6 and the lower welding needle 7 are disposed facing each other in an arrangement direction of the current collector member 53 and the electrode lead-out member 511.

A welding region of the current collector member 53 and a welding region of the conductive protective layer 531 may be in direct contact with each other, or another structure may be disposed between the two to facilitate welding.

The embodiments of this application do not limit shapes of the current collector member 53 and the electrode lead-out member 511, which vary with the housing 51. For example, the current collector member 53 is disk-shaped, and the electrode lead-out member 511 is columnar.

The current collector member 53 has the conductive protective layer 531, the conductive protective layer 531 can protect a position of the current collector member 53 where the current collector member 53 is in contact with a upper welding needle 6 during welding, reducing the degree of adhesion of the current collector member 53 to the upper welding needle 6 or even avoiding adhesion of the current collector member 53 to the upper welding needle 6, reducing damage to the current collector member 53, and improving the yield rate of the battery cell 5.

Moreover, the conductive protective layer 531 can be used to conduct current, facilitating passing of current through the current collector member 53 and the electrode lead-out member 511 for welding.

In addition, a metal oxide film is prone to be formed at the welding region where the current collector member 53 is in contact with the upper welding needle 6. The metal oxide film has a high melting point, and the presence of the metal oxide film increases the welding difficulty and reduces the welding quality. The presence of the conductive protective layer 531 can reduce the formation of the metal oxide film, improve welding quality, decrease welding difficulty, and increase welding efficiency.

In some embodiments, the current collector member 53 includes a current collector plate 532, and the conductive protective layer 531 is disposed on a surface of the current collector plate 532 facing away from the electrode lead-out member 511; where a material of the current collector plate 532 includes a first metal, and a material of the conductive protective layer 531 includes a second metal, metal activity of the second metal being weaker than metal activity of the first metal.

This embodiment does not limit the specific metal materials of the first metal and the second metal, for example, the first metal is aluminum, and the second metal is nickel, copper, or silver.

Metal activity of the conductive protective layer 531 is weaker than metal activity of the current collector plate 532. The current collector plate 532 is relatively more prone to chemically react with the upper welding needle 6 of a metal material, forming an alloy and sticking together with the upper welding needle. Therefore, through the provision of the conductive protective layer 531, which has weaker metal activity and is less prone to chemically react with the upper welding needle 6, the situation of adhesion of the current collector member 53 to the upper welding needle 6 is alleviated and even avoided, improving the yield rate of the battery cell 5. The conductive protective layer 531 is made of a metal material, which makes it easier to manufacture and has lower manufacturing costs.

Moreover, metal activity of the current collector plate 532 is stronger, and the welding region of the current collector plate 532 is more prone to generate a metal oxide film. The metal oxide film has a higher melting point and is not easy to melt during welding, which increases the welding difficulty and may easily cause rosin joint problems, reducing the welding quality and efficiency. The conductive protective layer 531 has weaker metal activity and is not prone to generate a metal oxide film, and the amount of the generated metal oxide film is small. Therefore, the current collector plate 532 being in contact with the upper welding needle 6 through the conductive protective layer 531 can improve welding efficiency and welding quality.

In some embodiments, the current collector plate 532 includes a plate body 533 and a protrusion portion 534 protruding from the plate body 533 and facing toward the electrode lead-out member 511, the current collector plate 532 is provided with a recess portion 535 at a position corresponding to the protrusion portion 534, and the conductive protective layer 531 is disposed on a bottom surface of the recess portion 535; and the electrode lead-out member 511 is provided with an accommodating portion 512 at a position opposite the protrusion portion 534, and the protrusion portion 534 and the accommodating portion 512 fit each other in a concave-convex manner.

This embodiment does not limit the sizes of the protrusion portion 534 and the accommodating portion 512, but a surface of the protrusion portion 534 facing the electrode lead-out member 511 needs to be at least partially fitted to a bottom surface of the accommodating portion 512.

The embodiments of this application do not limit the specific shape of the protrusion portion 534, and the protrusion portion 534 may be a V-shaped structure, an arc-shaped structure, or a structure of other shapes.

In this embodiment, the recess portion 535 refers to a recessed space formed by collapse of the protrusion portion 534 toward the electrode lead-out member 511.

The embodiments of this application do not limit the shape of the recess portion 535, either. For example, the shape and size of the recess portion 535 match the shape and size of an end of the upper welding needle 6. Optionally, an entire bottom surface of the recess portion 535 abuts against the end of the upper welding needle 6.

Through the provision of the protrusion portion 534 and the accommodating portion 512, the contact area between a welding region of the current collector plate 532 and a welding region of the electrode lead-out member 511 is increased, thereby enhancing the current flow capability of the battery cell 5, increasing the heat input, accelerating the melting speed of the welding region of the current collector plate 532 and the welding region of the electrode lead-out member 511, and improving the welding efficiency and welding quality. Furthermore, the provision of the recess portion 535 also increases an internal space of the electrode assembly 52; and the provision of the accommodating portion 512 reduces the manufacturing costs of the electrode lead-out member 511.

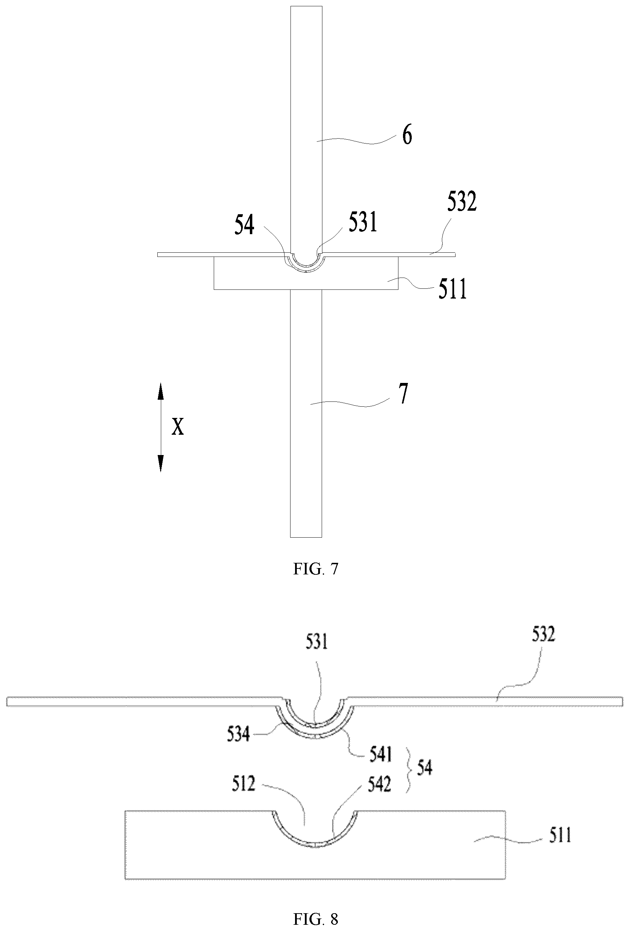

FIG. 7 is a schematic structural diagram of a current collector member and an electrode lead-out member in a battery cell in a welding process according to some embodiments of this application.

As shown in FIG. 7, in some embodiments, the battery cell 5 further includes a welding layer 54, where the welding layer 54 is disposed between the current collector member 53 and the electrode lead-out member 511 and connects the current collector member 53 to the electrode lead-out member 511.

The embodiments of this application do not limit the material of the welding layer 54, which may be a metal material, or other non-metallic conductive and heat-resistant materials, such as metallic nickel or conductive carbon.

In the embodiments of this application, the welding layer 54 is disposed opposite the conductive protective layer 531 in an arrangement direction of the electrode lead-out member 511 and the current collector member 53.

The welding layer 54 in the embodiments of this application may be disposed on a side of the current collector member 53 facing the electrode lead-out member 511, on a side of the electrode lead-out member 511 facing the current collector member 53, or on both the current collector member 53 and the electrode lead-out member 511.

When the welding layer 54 is provided on at least one of the current collector member 53 and the electrode lead-out member 511, compared to a situation when the two are in direct contact, the welding layer 54 can alleviate the problem of high welding difficulty and low welding quality caused by the contact of the metal oxide films formed on the current collector member 53 and the electrode lead-out member 511 in their respective welding regions, thereby improving the welding quality and welding efficiency.

In some embodiments, a material of the current collector member 53 includes the first metal, a material of the electrode lead-out member 511 includes a third metal, and a material of the welding layer 54 includes a fourth metal, metal activity of the fourth metal being weaker than metal activity of either the first metal or the third metal.

It should be noted that the material of the current collector member 53 includes the first metal, where the first metal is the material used for the current collector plate 532.

The embodiments of this application do not limit the materials of the first metal, the third metal, and the fourth metal. For example, the first metal and the third metal are both aluminum, and the fourth metal is nickel, silver, or iron.

The first metal and the third metal have relatively higher activity, and are prone to generate a metal oxide film, resulting in high welding difficulty and poor welding quality problems. Through the provision of the welding layer 54 with weaker metal activity between the two, where a metal oxide film 54 is less prone to be formed on the welding layer 54 and the amount of the formed metal oxide film is small, the two are welded through the welding layer 54, which can reduce the welding difficulty and improve the welding quality and efficiency. The welding layer 54 is made of a metal material, which makes it easier to manufacture and has lower manufacturing costs.

FIG. 8 is a schematic structural diagram of a current collector member and an electrode lead-out member according to some embodiments of this application.

As shown in FIG. 8, in some embodiments, the welding layer 54 includes a first welding sub-layer 541 and a second welding sub-layer 542 stacked together, the first welding sub-layer 541 being disposed on the current collector member 53, and the second welding sub-layer 542 being disposed on the electrode lead-out member 511.

In the embodiments of this application, the first welding sub-layer 541 and the second welding sub-layer 542 are stacked together, meaning that before welding, the first welding sub-layer 541 is coated on the current collector member 53, the second welding sub-layer 542 is coated on the electrode lead-out member 511, and the first welding sub-layer 541 and the second welding sub-layer 542 abut against each other. After welding, the first welding sub-layer 541 and the second welding sub-layer 542 are welded together, thereby the current collector member 53 and the electrode lead-out member 511 are welded together.

The embodiments of this application do not limit the materials of the first welding sub-layer 541 and the second welding sub-layer 542, the metal materials used by the two may be the same or different. For example, the materials of the first welding sub-layer 541 and the second welding sub-layer 542 are both nickel, and the materials of the first metal and the third metal are both aluminum. When the metal materials of the first welding sub-layer 541 and the second welding sub-layer 542 are different, metal activity of the first welding sub-layer 541 and the second welding sub-layer 542 is weaker than metal activity of either the first metal or the third metal. For example, the materials of the first metal and the third metal are both aluminum, the material of the first welding sub-layer 541 is nickel, and the material of the second welding sub-layer 542 is silver.

The embodiments of this application do not limit the coating area and coating thickness of the first welding sub-layer 541 and the second welding sub-layer 542, the coating areas of the two may be the same or different. For example, the coating thickness of the two may be the same or different.

Through the provision of the first welding sub-layer 541 on the current collector member 53 and the provision of the second welding sub-layer 542 on the electrode lead-out member 511, the current collector member 53 and the electrode lead-out member 511 are welded together through the first welding sub-layer 541 and the second welding sub-layer 542. Metal activity of the first welding sub-layer 541 and the second welding sub-layer 542 is weaker than metal activity of either the first metal contained in the current collector member 53 or the third metal contained in the electrode lead-out member 511. Therefore, compared to the welding of the current collector member 53 to the electrode lead-out member 511, during the welding of the first welding sub-layer 541 to the second welding sub-layer 542, a metal oxide film is less prone to be formed and the amount of the formed metal oxide film is small, resulting in low welding difficulty and high welding quality.

In some embodiments, the current collector member 53 includes the plate body 533 and the protrusion portion 534 protruding from the plate body 533 and facing toward the electrode lead-out member 511, the current collector member 53 is provided with the recess portion 535 at the position corresponding to the protrusion portion 534, and the conductive protective layer 531 is disposed on the bottom surface of the recess portion 535; and the electrode lead-out member 511 is provided with the accommodating portion 512 at a position corresponding to the protrusion portion 534, and the protrusion portion 534 and the accommodating portion 512 fit each other in a concave-convex manner; and the first welding sub-layer 541 is disposed on a surface of the protrusion portion 534 facing the electrode lead-out member 511, and the second welding sub-layer 542 is disposed on a bottom surface of the accommodating portion 512.

The protrusion portion 534, the recess portion 535, and the accommodating portion 512 in the embodiments of this application are as described above.

In the embodiments of this application, the first welding sub-layer 541 may be disposed on part of the surface of the protrusion portion 534 facing the electrode lead-out member 511, or on the entire surface of the protrusion portion 534 facing the electrode lead-out member 511. Similarly, the second welding sub-layer 542 may be disposed on part of the bottom surface of the accommodating portion 512, or on the entire bottom surface of the accommodating portion 512.

Through the provision of the first welding sub-layer 541 on the protrusion portion 534 and the second welding sub-layer 542 on the accommodating portion 512, the contact area between the welding region of the current collector plate 532 and the welding region of the electrode lead-out member 511 is increased, thereby enhancing the current flow capability of the battery cell 5, increasing the heat input, and improving the welding efficiency and welding quality.

In some embodiments, the protrusion portion 534 is a curved structure.

The embodiments of this application do not limit the specific shape of the curved structure. It may be a curved structure with an arc shape, a curved structure with a parabolic shape, or a curved structure of another shape.

The protrusion portion 534 is a curved structure, its surface facing the electrode lead-out member 511 is a curved surface, and the bottom surface of the accommodating portion 512 is fitted to the curved surface of the protrusion portion 534.

The protrusion portion 534 is configured as a curved structure, which significantly increases the contact area between the welding region of the electrode lead-out member 511 and the welding region of the current collector member 53, thereby increasing the heat input, and improving the welding efficiency and welding quality.

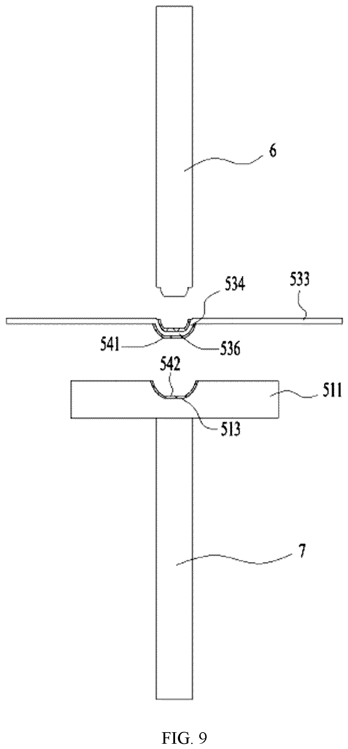

FIG. 9 is another exploded view of a current collector member and an electrode lead-out member in a battery cell in a welding process according to some embodiments of this application.

As shown in FIG. 9, in some embodiments, the protrusion portion 534 includes a first planar portion 536 disposed in a central region of itself, and a bottom surface of the accommodating portion 512 includes a second planar portion 513, the first planar portion 536 and the second planar portion 513 being in abutting fit.

In the embodiments of this application, the first planar portion 536 and the second planar portion 513 are both planar structures, and the surfaces abutting with each other are both planes.

In the embodiments of this application, the protrusion portion 534 further includes an annular sidewall surrounding the first planar portion 536. Optionally, the annular sidewall is fitted to the accommodating portion 512.

The protrusion portion 534 is fitted to the accommodating portion 512 through the first planar portion 536 and the second planar portion 513, making the protrusion portion 534 and the accommodating portion 512 easy to process and manufacture. In addition, the degree of fitting between the first planar portion 536 and the second planar portion 513 is high, resulting in good welding quality.

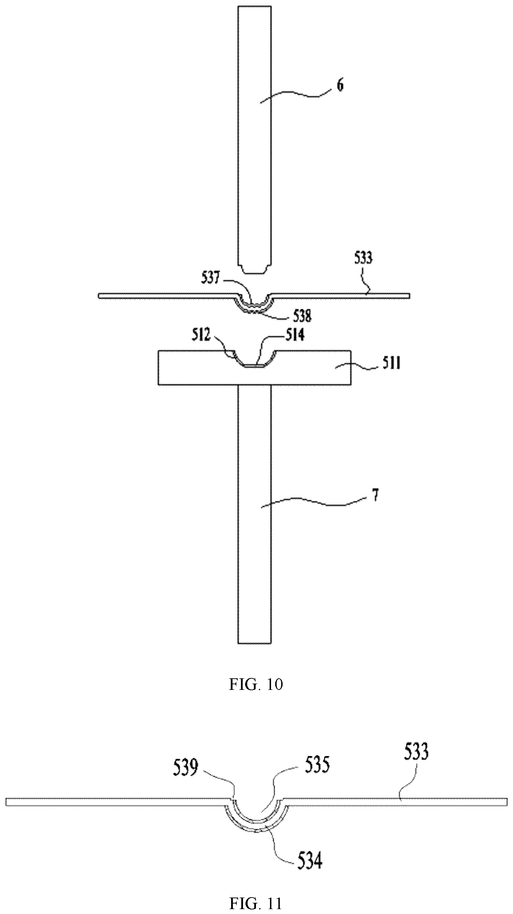

FIG. 10 is still another exploded view of a current collector member and an electrode lead-out member in a battery cell in a welding process according to some embodiments of this application.

As shown in FIG. 10, in some embodiments, the protrusion portion 534 includes a plurality of protruding structures 537 disposed in a central region, the protruding structures 537 protruding in a direction approaching and/or leaving a bottom surface of the accommodating portion 512.

In the embodiments of this application, the plurality of protruding structures 537 may all protrude in a direction approaching the bottom surface of the accommodating portion 512, or they may all protrude in a direction leaving the bottom surface of the accommodating portion 512. Alternatively, some may protrude in the direction approaching the bottom surface of the accommodating portion 512, and some may protrude in the direction leaving the bottom surface of the accommodating portion 512. When some of the plurality of protruding structures 537 protrude in the direction approaching the bottom surface of the accommodating portion 512, and some protrude in the direction leaving the bottom surface of the accommodating portion 512, the embodiments of this application do not limit the arrangement mode of the two parts of the protruding structures 537. For example, the two parts of the protruding structures 537 are alternately arranged, in other words, the protruding structures 537 form a wave structure.

The embodiments of this application do not limit the protrusion heights of the protruding structures 537. The protrusion heights of all the protruding structures 537 may be the same or different, or partially the same and partially different.

In the embodiments of this application, the protrusion portion 534 further includes an annular sidewall surrounding the plurality of protruding structures 537. Optionally, the annular sidewall is fitted to the accommodating portion 512.

In the embodiments of this application, the accommodating portion 512 may be fitted to the protruding structures 537 of the protrusion portion 534 in a concave-convex manner, or it may simply abut against the protruding structures 537 through a plane, a curved surface, or a surface of another shape.

Due to the presence of the plurality of protruding structures 537, the current per unit area of the protrusion portion 534 increases during welding, and the heat input increases, thus the welding quality is improved.

In some embodiments, the bottom surface of the accommodating portion 512 includes a third planar portion 514, and the plurality of protruding structures 537 include a plurality of protrusions 538 protruding in the direction approaching the bottom surface of the accommodating portion 512, the third planar portion 514 abutting against at least part of the plurality of protrusions 538.

In this embodiment, a side of the third planar portion 514 facing the protruding structures 537 is a plane, and the third planar portion 514 abuts against at least part of the plurality of protrusions 538 through the plane.

The accommodating portion 512 abuts against at least part of the protrusions 538 through the plane, making it easy to process and manufacture.

FIG. 11 is a schematic structural diagram of the current collector member in FIG. 8.

As shown in FIG. 11, in some embodiments, a surface of the protrusion portion 534 facing away from the electrode lead-out member 511 includes a storage portion 539 connecting to the bottom surface of the recess portion 535, the storage portion 539 being in communication with the recess portion 535.

The embodiments of this application do not limit the specific shape of the storage portion 539. For example, the storage portion 539 is a groove structure.

In the embodiments of this application, a plurality of storage portions 539 may be included, and the plurality of storage portions 539 are disposed at intervals on an outer periphery of the recess portion 535; alternatively, only one storage portion 539 is included.

The storage portion 539 is provided to accommodate the overflow material overflowed from the current collector member 53 during welding, reducing the volume of material overflowed to other parts and improving the yield rate of the battery cell 5.

In some embodiments, the storage portion 539 is disposed around the bottom surface of the recess portion 535.

In this embodiment, the storage portion 539 is continuously disposed on an outer periphery side of the recess portion 535.

By being disposed around the bottom surface of the recess portion 535, it can accommodate overflow material overflowed from the recess portion 535 at any angle, significantly reducing the volume of overflow material overflowed to other parts.

In some embodiments, a groove is disposed on a side of the plate body 533 facing away from the electrode lead-out member 511.

The embodiments of this application do not limit the specific provision positions and the number of the grooves. For example, the number of grooves is two, and the two grooves are symmetrically disposed along the recess portion 535.

Through the provision of the groove on the side of the plate body 533 facing away from the electrode lead-out member 511, the deformation caused by the pressure of the upper welding needle 6 during welding can be reduced, improving the yield rate of the battery cell 5. At the same time, the provision of the groove also facilitates the injection of the electrolyte.

In some embodiments, the current collector member 53 and the electrode lead-out member 511 are arranged in a first direction X, where a ratio of a maximum dimension a by which the protrusion portion 534 protrudes from the plate body 533 along the first direction X to a dimension b of the plate body 533 in the first direction X is 1:1 to 5:1; and a ratio of a maximum dimension c of the accommodating portion 512 in the first direction X to a dimension d of the electrode lead-out member 511 in the first direction X is 1:2 to 1:5.

In this embodiment, the ratio of the maximum dimension a by which the protrusion portion 534 protrudes from the plate body 533 along the first direction X to the dimension b of the plate body 533 in the first direction X includes end values 1:1 and 5:1; and the ratio of the maximum dimension c of the accommodating portion 512 in the first direction X to the dimension d of the electrode lead-out member 511 in the first direction X includes end values 1:2 and 1:5.

The inventors have found that if the ratio of the maximum dimension a by which the protrusion portion 534 protrudes from the plate body 533 along the first direction X to the dimension b of the plate body 533 along the first direction X is too small, the contact area between the protrusion portion 534 and the accommodating portion 512 remains relatively small, the heat input is insufficient, and the improvement in welding quality is not significant. If the ratio of the maximum dimension c of the accommodating portion 512 in the first direction X to the dimension d of the electrode lead-out member 511 in the first direction X is too large, it will reduce the current flow area of the electrode lead-out member 511 and lower the yield rate of the battery cell 5.

In view of this, the inventors set the foregoing ratios to balance the welding quality and the yield rate of the battery cell 5, meaning that both the welding quality and the yield rate of the battery cell 5 are high.

In some embodiments, the current collector member 53 and the electrode lead-out member 511 are arranged in a first direction X, where a ratio of a projected area of the protrusion portion 534 on a first plane in the first direction X to a projected area of the current collector plate 532 on the first plane in the first direction X is 1:4 to 1:12; and a ratio of a projected area of the accommodating portion 512 on the first plane in the first direction X to a projected area of the electrode lead-out member 511 on the first plane in the first direction X is 1:2.5 to 1:6; the first plane being perpendicular to the first direction X.

In the embodiments of this application, the ratio of the projected area of the protrusion portion 534 on the first plane in the first direction X to the projected area of the current collector plate 532 on the first plane in the first direction X includes end values 1:4 and 1:12. The ratio of the projected area of the accommodating portion 512 on the first plane in the first direction X to the projected area of the electrode lead-out member 511 on the first plane in the first direction X includes end values 1:2.5 and 1:6.

The inventors have found that if the ratio of the projected area of the protrusion portion 534 on the first plane in the first direction X to the projected area of the current collector plate 532 on the first plane in the first direction X is too small, the contact area between the protrusion portion 534 and the accommodating portion 512 remains relatively small, the heat input is insufficient, and the improvement in the welding quality is not significant. If the ratio of the projected area of the accommodating portion 512 on the first plane in the first direction X to the projected area of the electrode lead-out member 511 on the first plane in the first direction X is too large, it will reduce the current flow area of the electrode lead-out member 511 and lower the yield rate of the battery cell 5.

In view of this, the inventors set the foregoing ratios to balance the welding quality and the yield rate of the battery cell 5, meaning that both the welding quality and the yield rate of the battery cell 5 are high.

An embodiment of this application further provides a battery 2, including the foregoing battery cell 5.

An embodiment of this application further provides an electric device, including the foregoing battery 2, where the battery 2 is configured to supply electrical energy.

Referring to FIG. 3 to FIG. 8, an embodiment of this application further provides a battery cell 5, where the battery cell 5 includes a housing 51, an electrode assembly 52, and a current collector member 53. The housing 51 has an electrode lead-out member 511. The electrode assembly 52 is accommodated in the housing 51 and includes a tab 521. The current collector member 53 is configured to electrically connect the tab 521 to the electrode lead-out member 511, where the current collector member 53 is welded to the electrode lead-out member 511, the current collector member 53 includes a conductive protective layer 531, and the conductive protective layer 531 is disposed on a side of the current collector member 53 facing away from the electrode lead-out member 511.

The current collector member 53 includes a current collector plate 532, and the conductive protective layer 531 is disposed on a surface of the current collector plate 532 facing away from the electrode lead-out member 511; where a material of the current collector plate 532 includes a first metal, and a material of the conductive protective layer 531 includes a second metal, metal activity of the second metal being weaker than metal activity of the first metal. the current collector plate 532 includes a plate body 533 and a protrusion portion 534 protruding from the plate body 533 and facing toward the electrode lead-out member 511, the current collector plate 532 is provided with a recess portion 535 at a position corresponding to the protrusion portion 534, and the conductive protective layer 531 is disposed on a bottom surface of the recess portion 535; and the electrode lead-out member 511 is provided with an accommodating portion 512 at a position opposite the protrusion portion 534, and the protrusion portion 534 and the accommodating portion 512 fit each other in a concave-convex manner.

The battery cell 5 further includes a welding layer 54, where the welding layer 54 is disposed between the current collector member 53 and the electrode lead-out member 511 and connects the current collector member 53 to the electrode lead-out member 511. A material of the current collector member 53 includes the first metal, a material of the electrode lead-out member 511 includes a third metal, and a material of the welding layer 54 includes a fourth metal, metal activity of the fourth metal being weaker than metal activity of either the first metal or the third metal. The welding layer 54 includes a first welding sub-layer 541 and a second welding sub-layer 542 stacked together. The first welding sub-layer 541 is disposed on a surface of the protrusion portion 534 facing the electrode lead-out member 511, and the second welding sub-layer 542 is disposed on a bottom surface of the accommodating portion 512. The protrusion portion 534 is a curved structure.

Although this application has been described with reference to the preferred embodiments, various modifications can be made to this application without departing from the scope of this application and the components therein can be replaced with equivalents. In particular, as long as there is no structural conflict, the various technical features mentioned in some embodiments can be combined in any manner. This application is not limited to the specific embodiments disclosed in this specification but includes all technical solutions falling within the scope of the claims.

## Claims

1. A battery cell, comprising:
a housing, having an electrode lead-out member;
an electrode assembly, accommodated in the housing and comprising a tab; and
a current collector member, configured to electrically connect the tab to the electrode lead-out member, wherein the current collector member is welded to the electrode lead-out member, the current collector member comprises a conductive protective layer, and the conductive protective layer is disposed on a side of the current collector member facing away from the electrode lead-out member.

2. The battery cell according to claim 1, wherein the current collector member comprises a current collector plate, and the conductive protective layer is disposed on a surface of the current collector plate facing away from the electrode lead-out member; and
a material of the current collector plate comprises a first metal, and a material of the conductive protective layer comprises a second metal, metal activity of the second metal being weaker than metal activity of the first metal.

3. The battery cell according to claim 2, wherein the current collector plate comprises a plate body and a protrusion portion protruding from the plate body and facing toward the electrode lead-out member, the current collector plate is provided with a recess portion at a position corresponding to the protrusion portion, and the conductive protective layer is disposed on a bottom surface of the recess portion; and
the electrode lead-out member is provided with an accommodating portion at a position opposite the protrusion portion, and the protrusion portion and the accommodating portion fit each other in a concave-convex manner.

4. The battery cell according to any one of claims 1 to 3, further comprising a welding layer, wherein the welding layer is disposed between the current collector member and the electrode lead-out member and connects the current collector member to the electrode lead-out member.

5. The battery cell according to claim 4, wherein a material of the current collector member comprises the first metal, a material of the electrode lead-out member comprises a third metal, and a material of the welding layer comprises a fourth metal, metal activity of the fourth metal being weaker than metal activity of either the first metal or the third metal.

6. The battery cell according to claim 4 or claim 5, wherein the welding layer comprises a first welding sub-layer and a second welding sub-layer stacked together, the first welding sub-layer being disposed on the current collector member, and the second welding sub-layer being disposed on the electrode lead-out member.

7. The battery cell according to claim 6, wherein the current collector member comprises the plate body and the protrusion portion protruding from the plate body and facing toward the electrode lead-out member, the current collector member is provided with the recess portion at the position corresponding to the protrusion portion, and the conductive protective layer is disposed on the bottom surface of the recess portion; the electrode lead-out member is provided with the accommodating portion at a position corresponding to the protrusion portion, and the protrusion portion and the accommodating portion fit each other in a concave-convex manner; and
the first welding sub-layer is disposed on a surface of the protrusion portion facing the electrode lead-out member, and the second welding sub-layer is disposed on a bottom surface of the accommodating portion.

8. The battery cell according to claim 3, wherein the protrusion portion is a curved structure.

9. The battery cell according to claim 3, wherein the protrusion portion comprises a first planar portion disposed in a central region of itself, and a bottom surface of the accommodating portion comprises a second planar portion, the first planar portion and the second planar portion being in abutting fit.

10. The battery cell according to claim 3, wherein the protrusion portion comprises a plurality of protruding structures disposed in a central region, the protruding structures protruding in a direction approaching and/or leaving a bottom surface of the accommodating portion.

11. The battery cell according to claim 10, wherein the bottom surface of the accommodating portion comprises a third planar portion, and the plurality of protruding structures comprise a plurality of protrusions protruding in the direction approaching the bottom surface of the accommodating portion, the third planar portion abutting against at least part of the plurality of protrusions.

12. The battery cell according to claim 3, wherein a surface of the protrusion portion facing away from the electrode lead-out member comprises a storage portion connecting to the bottom surface of the recess portion, the storage portion being in communication with the recess portion.

13. The battery cell according to claim 12, wherein the storage portion is disposed around the bottom surface of the recess portion.

14. The battery cell according to claim 3, wherein a groove is disposed on a side of the plate body facing away from the electrode lead-out member.

15. The battery cell according to claim 3, wherein the current collector member and the electrode lead-out member are arranged in a first direction;
a ratio of a maximum dimension by which the protrusion portion protrudes from the plate body along the first direction to a dimension of the plate body in the first direction is 1: 1 to 5:1; and
a ratio of a maximum dimension of the accommodating portion in the first direction to a dimension of the electrode lead-out member in the first direction is 1:2 to 1:5.

16. The battery cell according to claim 3, wherein the current collector member and the electrode lead-out member are arranged in a first direction;
a ratio of a projected area of the protrusion portion on a first plane in the first direction to a projected area of the current collector plate on the first plane in the first direction is 1:4 to 1:12;
a ratio of a projected area of the accommodating portion on the first plane in the first direction to a projected area of the electrode lead-out member on the first plane in the first direction is 1:2.5 to 1:6; and
the first plane is perpendicular to the first direction.

17. A battery, comprising the battery cell according to any one of claims 1 to 16.

18. An electric device, comprising the battery according to claim 17, wherein the battery is configured to supply electrical energy.
